# EUROPEAN PATENT APPLICATION

(11) **EP 4 790 093 A1**
(43) Date of publication of application: **12.08.2026**
(21) Application number: 25756809.7
(22) Date of filing: 16.05.2025
(51) Int. Cl.: C08L 33/02, C08J 9/14, C08L 67/04, C08L 71/00, C08L 33/20, C08F 220/06, C08F 220/48, C08F 220/56, C08F 220/40

(54) **FOAMABLE COMPOSITION, BIODEGRADABLE PMI FOAM, AND PREPARATION METHOD THEREFOR**

(30) Priority: 22.11.2024 CN 202411679835
(71) Applicant: Haobo (Fujian) New Material Technology Co., Ltd, Quanzhou, Fujian 362214 (CN)
(72) Inventor: YANG, Yong, Quanzhou, Fujian 362214 (CN); TING, Hoikwan, Quanzhou, Fujian 362214 (CN); ZENG, Zequn, Quanzhou, Fujian 362214 (CN)
(74) Representative: Elzaburu S.L.P.
(86) International application number: PCT/CN2025/095540
(87) International publication number: WO 2026/108112

(57) **Abstract**

The present disclosure relates to a foamable composition, biodegradable PMI foam and preparation method thereof. The foamable composition comprises a comonomer, an initiator, a foaming agent and a crosslinking agent, wherein the comonomer comprises a first comonomer and a second comonomer, the first comonomer is selected from one or two of methacrylonitrile or acrylonitrile, and the second comonomer is selected from methacrylic acid; the composition further comprises a degradation agent selected from one or a combination of two or more of polylactic acid, starch-based polyether polyol and polycaprolactone; the weight ratio of the degradation agent to the comonomer is 30-132 : 180. The foamable composition of the present disclosure improves the biodegradation rate of PMI foam while retaining the original high performance of PMI foam, which is achieved through scientific incorporation of degradation agent and formula adjustment, and by adopting an *in-situ* polymerization technology.

## Description

### CROSS-REFERENCE TO RELATED APPLICATIONS

The present application claims the benefit of priority to Chinese Patent Application No. 2024116798354 filed on November 22, 2024, entitled "A foamable composition, biodegradable PMI foam and preparation method thereof", the contents of which are incorporated herein by reference in its entirety for all purposes.

### TECHNICAL FIELD

The present disclosure relates to the technical field of foamable new materials, and particularly relates to a foamable composition, biodegradable PMI foam and preparation method thereof.

### BACKGROUND

Polymethacrylimide (PMI) foam is an advanced new material. It is typically obtained by foaming after copolymerization of methacrylic acid (MAA) and methacrylonitrile (MAN) or methacrylic acid (MAA) and acrylonitrile (AN). It is easy to be processed and has excellent strength, stiffness, thermal stability and chemical resistance. It has been widely used in aerospace, rail transit, wind power generation, consumer electronics, medical equipment and other fields, and has developed rapidly in recent years.

However, with the popularization of PMI foam application, the problem of how to deal with PMI foam after it is abandoned gradually appears, which has been puzzling this industry. PMI foam is difficult to degrade in natural environment because of its excellent high temperature resistance and solvent resistance features. The traditional chemical degradation method generally needs to be carried out in a high temperature and strong alkaline environment, which has the problems of limited conditions, high cost and low efficiency; and if the waste is treated by incineration, the incineration will aggravate air pollution.

Additionally, the "white pollution" caused by waste plastics has always been a key focus of global environmental protection. The research and development of biodegradable plastics is a worldwide trend. For example, patent CN117777602B developed a degradable polypropylene plastic masterbatch. A mixture of iron diethyldithiocarbamate and titanium dioxide was added to plastic as a degradation agent, achieving a 29% photodegradation rate within 30 days. Patent CN112063042B developed a degradable polypropylene plastic, using cellulose coated with activated carbon as a degradation agent. Patent US9914824B2 developed a biodegradable polyethylene plastic, wherein cobalt stearate, iron stearate, cerium stearate, manganese stearate, and vanadium stearate served as biodegradation agents. Results showed that the produced plastic garbage bags biodegrade within 24-36 months under landfill conditions. Patent CN108264736B developed a degradable poly(butylene adipate-co-terephthalate) (PBAT) foam material. 1,4-Butanediol, hexanediol, or ethylene glycol were added as degradation agents, enabling near-complete degradation in approximately 2-3 years. US11597235B2 developed a degradable polyurethane foam for tyres, wherein dimethyl phosphonate and diethyl phosphonate were added as degradation agents, allowing the polyurethane foam to degrade at temperatures above 120°C.

Due to the widespread application of PMI foam, a significant amount of waste will be generated. The disposal of discarded PMI foam is an urgent problem to be solved. Therefore, the development of environmentally friendly biodegradable PMI foam is a vital pathway for implementing sustainable development.

### SUMMARY

At present, PMI foam is difficult to degrade, and the disposal of discarded PMI foam faces significant economic pressure and environmental challenges. The prior art disclosed schemes for adding degradation agents to plastics such as polypropylene, polyethylene, PBAT, polyurethane, etc., all of which effectively realized the degradability of plastics such as polypropylene, polyethylene, PBAT, polyurethane, etc. However, the raw materials, reaction systems, product properties and application scenarios of these plastics are quite different from PMI foams, and the types of degradation agents are diverse with widely varying properties, and not all of them are suitable for producing degradable PMI foam. The inventors have not identified any research that effectively achieves the degradation of PMI foam.

In one aspect, the present disclosure provides a biodegradable PMI foam and preparation method thereof, which solve the problems of difficult waste disposal, high cost and low efficiency of traditional PMI foam.

In another aspect, the present disclosure provides a method of converting existing PMI foams into biodegradable PMI foams, solving the problem of converting existing refractory PMI foams into biodegradable materials.

In another aspect, the present disclosure provides high strength, high biodegradability PMI foams.

In another aspect, the present disclosure provides degradation agents capable of being used in PMI foams.

In another aspect, the present disclosure provides a method of increasing the rate of biodegradation of PMI foam under composting conditions.

Specifically, the present disclosure proposed the following technical solutions:
First, the present disclosure provides a foamable composition comprising a comonomer, an initiator, a foaming agent and a crosslinking agent, wherein the comonomer comprises a first comonomer and a second comonomer,
the first comonomer is selected from one or two of methacrylonitrile or acrylonitrile, and the second comonomer is selected from methacrylic acid;
the composition further comprises a degradation agent selected from one or a combination of two or more of polylactic acid, starch-based polyether polyol and polycaprolactone;
the mass ratio of the degradation agent to the comonomer is 30-132 : 180.

In some embodiments, the comonomer further comprises a third comonomer, the third comonomer is selected from acrylamide monomers.

In some embodiments, the acrylamide monomer is selected from any one or a combination of two or more of acrylamide, methacrylamide, N-hydroxymethyl acrylamide and N,N-dimethyl acrylamide.

In some embodiments, the initiator is selected from any one or a combination of two or more of azobisisobutyronitrile, azobisisoheptanitrile, tert-butyl peroxy-2-ethylhexanoate and dilauryl peroxide; the foaming agent is selected from any one or a combination of two or more of formamide, N,N-dimethyl formamide, isopropanol, isobutanol, octane and isooctane; and the crosslinking agent is any one or two of allyl methacrylate and magnesium methacrylate.

In some embodiments, the molecular weight of the polylactic acid is 30,000-150,000, the molecular weight of the polycaprolactone is 10,000-120,000, the hydroxyl value of the starch-based polyether polyol is 300-600 mg KOH/g.

In some embodiments, the degradation agent is selected from polylactic acid.

In some embodiments, the mass ratio of the degradation agent to the comonomer is 50-110 : 180.

In some embodiments, the mass ratio of the first comonomer to the second comonomer is 0.6-1.5 : 1.

In some embodiments, the foamable composition comprises 64-120 parts by mass of a first comonomer, 64-120 parts by mass of a second comonomer, 1.2-3 parts by mass of an initiator, 10-18 parts by mass of a foaming agent, 0.8-2.4 parts by mass of a crosslinking agent, 30-132 parts by mass of a degradation agent, and 0-2.4 parts by mass of a third comonomer.

In some embodiments, the foamable composition comprises 72-110 parts by mass of a first comonomer, 72-110 parts by mass of a second comonomer, 1.8-2.75 parts by mass of an initiator, 11.25-16.5 parts by mass of a foaming agent, 0.9-2.2 parts by mass of a crosslinking agent, 40-121 parts by mass of a degradation agent, and 0.9-2.2 parts by mass of a third comonomer.

In some embodiments, the foamable composition comprises 72-88 parts by mass of methacrylonitrile as a first comonomer, 90-110 parts by mass of methacrylic acid as a second comonomer, 1.8-2.2 parts by mass of methacrylamide as a third comonomer, 2-2.75 parts by mass of azobisisobutyronitrile as an initiator, 11.25-13.75 parts by mass of formamide as a foaming agent, 1.8-2.2 parts by mass of allyl methacrylate as a crosslinking agent, and 30-99 parts by mass of polylactic acid as a degradation agent.

In some embodiments, the foamable composition comprises 90-110 parts by mass of acrylonitrile as a first comonomer, 72-88 parts by mass of methacrylic acid as a second comonomer, 0.9-1.1 parts by mass of acrylamide as a third comonomer, 1.8-2.2 parts by mass of tert-butyl peroxy-2-ethylhexanoate as an initiator, 13.5-16.5 parts by mass of isopropanol as a foaming agent, 0.9-1.1 parts by mass of magnesium methacrylate as a crosslinking agent, and 30-99 parts by mass of polylactic acid as a degradation agent.

In some embodiments, the foamable composition comprises 70-90 parts by mass of a degradation agent.

Second, the present disclosure also provides a biodegradable foam obtained by foaming the foamable composition according to any one of the foregoing.

Third, the present disclosure also provides a preparation method for biodegradable foam, characterized in that the method comprising the following steps:
S1. prepolymerization: performing polymerization reaction using the foamable composition according to any one of the foregoing to obtain a prepolymer;
S2. heat treatment before foaming: heat treating the prepolymer to obtain a polymer;
S3. foaming: foaming the polymer to obtain foam.

In some embodiments, in step S1, a degradation agent, a comonomer, an initiator, a foaming agent and a crosslinking agent are comprised in a polymerization reaction system.

In some embodiments, in step S1, the temperature for the polymerization reaction is 20°C-60°C.

In some embodiments, the temperature for the heat treatment in step S2 is 60°C-120°C.

In some embodiments, the temperature for the foaming in step S3 is 160°C-250°C.

In some embodiments, the following steps are further comprised:
S4. heat treatment after foaming: heat treating the foam at 135°C-220°C to obtain high temperature resistant foam.

The beneficial effects of the present disclosure include:
The biodegradable PMI foam provided by the present disclosure achieves both high strength and degradability through scientific addition and proportion regulation of degradation agents, effectively improving the degradation rate of PMI foam while maintaining sufficient mechanical performance.

### DETAILED DESCRIPTION

The technical solutions of the present disclosure will be described below clearly and completely. Obviously, based on the specific embodiments in the present disclosure, all other embodiments obtained by those of ordinary skill in the art without inventive effort shall fall within the protection scope of the present disclosure.

It should be noted that the terminology used herein is only for describing specific embodiments and not intended to limit exemplary embodiments according to the present disclosure.

### I. Terms

As used herein, the term "methacrylonitrile (MAN)" refers to a colorless liquid organic compound having the chemical formula of C₄H₅N, a molecular weight of 67.089, a density of 0.8 g/cm³, and a molar volume of 82.8 cm³/mol, characterized by slightly soluble in water and chloroform, and miscible with propanol, diethyl ether, acetone, octane and toluene.

As used herein, the term "acrylonitrile (AN)" refers to a colorless liquid organic compound having the chemical formula of C₃H₃N, a molecular weight of 53.063, a density of 0.806 g/cm³, and a molar volume of 66.5 cm³/mol. AN is sparingly soluble in water and soluble in ethanol, diethyl ether, acetone, benzene and carbon tetrachloride.

As used herein, the term "methacrylic acid (MAA)" refers to a colorless liquid organic compound having the chemical formula of C₄H₆O₂, a molecular weight of 86.089, a density of 1.015 g/cm³, and a molar volume of 84.0 cm³/mol. MAA is soluble in hot water and soluble in most organic solvents such as ethanol and diethyl ether.

A "third comonomer" is often added during the copolymerization reaction of MAN/AN and MAA. As used herein, the term "third comonomer" refers to the use of one or more unsaturated or cyclic monomer molecules to participate in the polymerization reaction, those commonly used include acrylamide, methacrylamide, N-methylolacrylamide, and N,N-dimethylacrylamide. Acrylamide is a white crystalline powder organic compound with a chemical molecular formula of C₃H₅NO, a molecular weight of 71.078, a density of 1.322 g/cm³, and a molar volume of 73.9 cm³/mol, characterized by soluble in water, ethanol, diethyl ether, and acetone, but insoluble in benzene and hexane; methacrylamide is a white crystalline organic compound, its chemical formula is C₄H₇NO, molecular weight is 85.104, density is 1.115 g/cm³, molar volume is 73.9 cm³/mol, characterized by easily soluble in water, soluble in alcohol, dichloromethane, slightly soluble in ether, chloroform, insoluble in petroleum ether, carbon tetrachloride characteristics; N-hydroxymethylacrylamide (CAS:924-42-5 ) is a colorless or yellow solution of organic compounds, its chemical formula is C₄H₇NO₂, molecular weight is 101.1039, density is 1.082 g/cm³. N,N-dimethylacrylamide (CAS: 2680-03-7) is a colorless liquid, its chemical formula is C₅H₉NO, which has good solubility and reactivity and is mostly used in polymer synthesis and modification.

As used herein, the term "initiator" is a compound with weak bonds, easily decomposed into reactive species, and decomposed into free radicals by heat. It is used to initiate free radical polymerization and copolymerization of olefin and diene monomers, and can also be used for crosslinking curing of unsaturated polyesters and polymer crosslinking reactions; commonly used initiators include azobisisobutyronitrile, azobisisoheptanitrile, tert-butyl peroxy-2-ethylhexanoate, and dilauroyl peroxide. Azobisisobutyronitrile (CAS: 78-67-1) is a white needle-like crystal, white powder crystal at low purity; insoluble in water, soluble in methanol, ethanol, acetone, diethyl ether, petroleum ether, toluene, aniline and other organic solvents; used as initiator for polymerization of vinyl chloride, vinyl acetate, acrylonitrile and other monomers. Azobisisoheptanitrile (CAS: 4419-11-8) is a colorless or white rhombic crystal; insoluble in water, soluble in organic solvents such as alcohol, ether and dimethylformamide; can be used as polymerization initiator of polyvinyl chloride, polyvinyl alcohol, polymethyl methacrylate and other polymer compounds alike. Tert-butyl peroxy-2-ethylhexanoate (CAS: 3006-82-4), also known as TBPO, is an organic peroxide initiator, colorless or pale-yellow clear liquid, used as polymerization initiator for vinyl acetate, vinyl chloride, methacrylic acid, styrene, ethylene and all other vinyl monomers; it can also be used as a heat-forming curing catalyst for unsaturated polyester resins. Dilauryl peroxide (CAS: 105-74-8), also known as initiator B, is a white powder, easily soluble in acetone, chloroform and other organic solvents and oils, insoluble in water; mainly used as a radical polymerization initiator, often combined with initiator A (di-tert-butyl peroxide).

As used herein, the term "foaming agent" refers to a compound which, upon thermal decomposition, releases gases such as carbon dioxide and nitrogen and forms fine pores in the polymer composition. The foaming agent is used to reduce the surface tension of liquids, align at the liquid film surface to form a double electron layer that surrounds air, thereby forming bubbles, which then combine to create foam. Commonly used foaming agents include formamide, N,N-dimethylformamide, isopropanol, isobutanol, octane, and isooctane. Formamide (CAS: 75-12-7) is a clear oily liquid miscible with water and ethanol and sparingly soluble in benzene, chloroform and diethyl ether. N,N-dimethylformamide (CAS: 68-12-2), chemical formula C₃H₇NO, is a colorless clear liquid. It can be mixed with water and most organic solvents at will, and has good solubility for a variety of organic compounds and inorganic compounds. Isopropanol (CAS: 67-63-0) is a colorless, strongly odorous flammable liquid at room temperature and pressure, miscible with water, alcohols, ethers, and chloroform, with a boiling point of 82 °C. Isobutanol (CAS: 78-83-1) is a colorless, clear liquid miscible with ethanol and diethyl ether, soluble in about 20 parts water, and has a boiling point of 108°C. Octane (CAS: 111-65-9) is a colorless clear liquid with a boiling point of 125.67 °C. Isooctane (CAS: 540-84-1) is a colorless, clear liquid, insoluble in water, soluble in ether, easily soluble in alcohol, acetone, benzene, chloroform, etc., with a boiling point of 98°C-99°C.

As used herein, the term "crosslinking agent" refers to a substance that, upon exposure, generates diradicals, interacts with polyhydrocarbon resins, forms bridge bonds between polymer molecular chains, and transforms into a three-dimensional insoluble structure, characterized by being soluble in aromatic hydrocarbons, halogenated hydrocarbons, cycloalkanes, acetone, and various alcohols, etc., slightly soluble in alkanes, and insoluble in water; commonly used crosslinking agents include allyl methacrylate, magnesium methacrylate, etc. Allyl methacrylate (CAS: 96-05-9) is a yellowish liquid, easily soluble in most organic solvents and almost insoluble in water, and is an important crosslinking agent. Magnesium methacrylate (CAS: 7095-16-1) is a white crystalline solid. It is soluble in water and some organic solvents, such as ethanol and ether, and is often used as a rubber additive to improve the crosslinking of rubber.

As used herein, the term " degradation agent" refers to a novel functional additive that complies with environmental requirements, added into plastics to facilitate their degradation, primarily serves to address the long-standing issue of white pollution. There are two methods for adding degradants as auxiliaries into the PMI foam reaction system: first, introducing it during the polymerization stage through *in-situ* polymerization; second, blending it after polymerization completion but before foaming via stepwise mixing.

The term "*in situ* polymerization" in the present disclosure refers to a process in which both a degradation agent and a comonomer are added into a polymerization reaction system for polymerization. The *in-situ* polymerization allows the degradation agent to participate in the polymerization reaction and be uniformly dispersed into the prepolymer.

The term "stepwise mixing" in the present disclosure refers to a process in which after the copolymerization of the comonomer is completed, the polymer is crushed, and then the degradation agent and resin are added, and after uniform stirring, the high temperature foaming reaction is further carried out, so that the degradation agent is bonded into a whole through the resin and PMI foam during the foaming process.

In order to promote the degradation of PMI foam in natural environment, the inventor added a degradation agent before foaming, so that the PMI foam after foaming is easy to degrade, serves to address the long-standing issue of white pollution.

In order to match the production system and processing application scenarios of PMI foam and find suitable degradation agents, the inventor studied degradation agents include iron diethyldithiocarbamate, titanium dioxide, iron stearate, ethylene glycol, 1,4-butanediol, hexanediol, starch, cellulose acetate, chitosan, polyglycolic acid (PGA), poly (p-dioxanone) (PPDO), polycaprolactone (PCL), polyhydroxybutyrate (PHB), poly (3-hydroxybutyrate-co-3-hydroxyvalerate) (PHBV), polylactic acid (PLA), PBAT, poly (butylene succinate) (PBS), polyvinyl alcohol (PVA), etc., and it was found that starch-based polyether polyol, PLA and PCL could be used in PMI foam as degradation agent, after evaluating the polymerization reaction and degradation effect of PMI foam after adding degradation agent. Starch polyether polyol is a kind of polyol prepared from starch as raw material and glycerol-polyethylene glycol as liquefying agent. Polylactic acid (CAS: 26100-51-6) is a polymer formed by polymerization of lactic acid molecules, which is difficult to dissolve in general organic solvents, but can be accelerated dissolved in hot state or mixed with some ester or ether solvents; polylactic acid is a biodegradable polymer that can be degraded into harmless products by microorganism actions in the natural environment and is environmentally friendly. Polycaprolactone (CAS: 24980-41-4), also known as poly ε-caprolactone, is a high molecular organic polymer formed by ring-opening polymerization of ε-caprolactone monomers catalyzed by metal anion complex catalysts; polycaprolactone is a biodegradable polymer that is nontoxic, biodegradable in soil, excellent in mixing, mechanically compatible with many polymers and good in adhesion to many substrates.

### II. Detailed Embodiments

In one aspect, the present disclosure provides a foamable composition comprising a comonomer, an initiator, a foaming agent , a crosslinking agent and a degradation agent.

In some embodiments, the preparation of PMI foam requires at least two comonomers, the first comonomer is selected from one or two of methacrylonitrile or acrylonitrile, and the second comonomer is selected from methacrylic acid.

In some embodiments, the degradation agent is selected from one or a combination of two or more of polylactic acid, starch-based polyether polyol and polycaprolactone.

In some embodiments, the mass ratio of the degradation agent to the comonomer is, for example, 30-132:180, for example, 30:180, 35:180, 40:180, 45:180, 50:180, 55:180, 60:180, 65:180, 70:180, 75:180, 80:180, 85:180, 90:180, 95:180, 100:180, 105:180, 110:180, 115:180, 120:180, 125:180, 130:180, or 132:180.

In some embodiments, the degradation agent is selected from starch-based polyether polyol.

In some embodiments, the hydroxyl value of the starch-based polyether polyol is 400-500 mg KOH/g, for example, 300 mg KOH/g, 350 mg KOH/g, 400 mg KOH/g, 450 mg KOH/g, 500 mg KOH/g, 550 mg KOH/g, or 600 mg KOH/g.

In some embodiments, the hydroxyl value of the starch-based polyether polyol is 300-600 mg KOH/g, for example, 400 mg KOH/g, 410 mg KOH/g, 420 mg KOH/g, 420 mg KOH/g, 440 mg KOH/g, 450 mg KOH/g, 460 mg KOH/g, 470 mg KOH/g, 480 mg KOH/g, 490 mg KOH/g, 500 mg KOH/g.

In some embodiments, the degradation agent is selected from polycaprolactone.

In some embodiments, the molecular weight of the polycaprolactone is 10,000-120,000, for example, 10,000, 20,000, 30,000, 40,000, 50,000, 60,000, 70,000, 80,000, 90,000, 100,000, 110,000, or 120,000.

In some embodiments, the molecular weight of the polycaprolactone is 20,000-110,000.

In some preferred embodiments, the molecular weight of the polycaprolactone is 30,000-110,000.

In some preferred embodiments, the molecular weight of the polycaprolactone is 40,000-100,000.

In some preferred embodiments, the molecular weight of the polycaprolactone is 50,000-100,000.

In some preferred embodiments, the molecular weight of the polycaprolactone is 60,000-90,000.

In some embodiments, the degradation agent is selected from polylactic acid, to allow the foam prepared from the foamable composition obtain better biodegradation rates and mechanical properties.

In some embodiments, the molecular weight of the polylactic acid is 30,000-150,000, for example, 30,000, 40,000, 50,000, 60,000, 70,000, 80,000, 90,000, 100,000, 110,000, 120,000, 130,000, 140,000, or 150,000.

In some preferred embodiments, the molecular weight of the polylactic acid is 50,000-140,000.

In some preferred embodiments, the molecular weight of the polylactic acid is 70,000-120,000.

In some preferred embodiments, the molecular weight of the polylactic acid is 80,000-110,000.

In some embodiments, the foamable composition comprises 64-120 parts by mass of a first comonomer, 64-120 parts by mass of a second comonomer, 1.2-3 parts by mass of an initiator, 10-18 parts by mass of a foaming agent, 0.8-2.4 parts by mass of a crosslinking agent, 30-132 parts by mass of a degradation agent, and 0-2.4 parts by mass of a third comonomer.

In some embodiments, the degradation agent is 30-132 parts by mass, for example, 30 parts, 35 parts, 40 parts, 45 parts, 50 parts, 55 parts, 60 parts, 65 parts, 70 parts, 75 parts, 80 parts, 85 parts, 90 parts, 95 parts, 100 parts, 105 parts, 110 parts, 115 parts, 120 parts, 125 parts, 129 parts, or 132 parts.

In some embodiments, the degradation agent is 40-95 parts by mass.

In some embodiments, the degradation agent is 50-110 parts by mass.

In some preferred embodiments, the degradation agent is 50-100 parts by mass.

In some preferred embodiments, the degradation agent is 50-90 parts by mass.

In some preferred embodiments, the degradation agent is 60-90 parts by mass.

In some preferred embodiments, the degradation agent is 70-90 parts by mass.

In some preferred embodiments, the degradation agent is 75-90 parts by mass.

In some preferred embodiments, the degradation agent is 75-85 parts by mass.

In some embodiments, the foamable composition comprises 72-110 parts by mass of a first comonomer, 72-110 parts by mass of a second comonomer, 1.8-2.75 parts by mass of an initiator, 11.25-16.5 parts by mass of a foaming agent, 0.9-2.2 parts by mass of a crosslinking agent, 40-121 parts by mass of a degradation agent, and 0.9-2.2 parts by mass of a third comonomer.

In some embodiments, the degradation agent is 40-121 parts by mass, for example, 40 parts, 45 parts, 50 parts, 55 parts, 60 parts, 65 parts, 70 parts, 75 parts, 80 parts, 85 parts, 90 parts, 95 parts, 100 parts, 105 parts, 110 parts, 115 parts, 118 parts, or 121 parts.

In some embodiments, the degradation agent is 40-95 parts by mass.

In some embodiments, the degradation agent is 50-110 parts by mass.

In some embodiments, the degradation agent is 50-100 parts by mass.

In some preferred embodiments, the degradation agent is 50-90 parts by mass.

In some preferred embodiments, the degradation agent is 60-90 parts by mass.

In some preferred embodiments, the degradation agent is 70-90 parts by mass.

In some preferred embodiments, the degradation agent is 75-90 parts by mass.

In some preferred embodiments, the degradation agent is 75-85 parts by mass.

In some embodiments, the foamable composition comprises 80-100 parts by mass of a first comonomer, 80-100 parts by mass of a second comonomer, 2-2.5 parts by mass of an initiator, 12.5-15 parts by mass of a foaming agent, 1-2 parts by mass of a crosslinking agent, 30-110 parts by mass of a degradation agent, and 1-2 parts by mass of a third comonomer.

In some embodiments, the degradation agent is 30-110 parts by mass, for example, 30 parts, 35 parts, 40 parts, 45 parts, 50 parts, 55 parts, 60 parts, 65 parts, 70 parts, 75 parts, 80 parts, 85 parts, 90 parts, 95 parts, 100 parts, 105 parts, or 110 parts.

In some preferred embodiments, the degradation agent is 40-95 parts by mass.

In some preferred embodiments, the degradation agent is 50-100 parts by mass.

In some preferred embodiments, the degradation agent is 50-90 parts by mass.

In some preferred embodiments, the degradation agent is 60-90 parts by mass.

In some preferred embodiments, the degradation agent is 70-90 parts by mass.

In some preferred embodiments, the degradation agent is 75-90 parts by mass.

In some preferred embodiments, the degradation agent is 75-85 parts by mass.

In some preferred embodiments, the foamable composition comprises 80-100 parts by mass of a first comonomer, 80-100 parts by mass of a second comonomer, 2-2.5 parts by mass of an initiator, 12.5-15 parts by mass of a foaming agent, 1-2 parts by mass of a crosslinking agent, 70-100 parts by mass of a degradation agent, and 1-2 parts by mass of a third comonomer.

In some embodiments, the foamable composition comprises 72-88 parts by mass of methacrylonitrile as a first comonomer, 90-110 parts by mass of methacrylic acid as a second comonomer, 1.8-2.2 parts by mass of methacrylamide as a third comonomer, 2-2.75 parts by mass of azobisisobutyronitrile as an initiator, 11.25-13.75 parts by mass of formamide as a foaming agent, 1.8-2.2 parts by mass of allyl methacrylate as a crosslinking agent, and 30-99 parts by mass of polylactic acid as a degradation agent.

In some embodiments, the degradation agent is 30-99 parts by mass, for example, 30 parts, 35 parts, 40 parts, 45 parts, 50 parts, 55 parts, 60 parts, 65 parts, 70 parts, 75 parts, 80 parts, 85 parts, 90 parts, 95 parts, or 99 parts.

In some embodiments, the degradation agent is 40-95 parts by mass.

In some preferred embodiments, the degradation agent is 50-90 parts by mass.

In some preferred embodiments, the degradation agent is 60-90 parts by mass.

In some preferred embodiments, the degradation agent is 70-90 parts by mass.

In some preferred embodiments, the degradation agent is 75-90 parts by mass.

In some preferred embodiments, the degradation agent is 75-85 parts by mass.

In some embodiments, the foamable composition comprises 90-110 parts by mass of acrylonitrile as a first comonomer, 72-88 parts by mass of methacrylic acid as a second comonomer, 0.9-1.1 parts by mass of acrylamide as a third comonomer, 1.8-2.2 parts by mass of tert-butyl peroxy-2-ethylhexanoate as an initiator, 13.5-16.5 parts by mass of isopropanol as a foaming agent, 0.9-1.1 parts by mass of magnesium methacrylate as a crosslinking agent, and 30-99 parts by mass of polylactic acid as a degradation agent.

In some embodiments, the degradation agent is 30-99 parts by mass, for example, 30 parts, 35 parts, 40 parts, 45 parts, 50 parts, 55 parts, 60 parts, 65 parts, 70 parts, 75 parts, 80 parts, 85 parts, 90 parts, 95 parts, or 99 parts.

In some embodiments, the degradation agent is 40-95 parts by mass.

In some embodiments, the degradation agent is 50-90 parts by mass.

In some preferred embodiments, the degradation agent is 60-90 parts by mass.

In some preferred embodiments, the degradation agent is 70-90 parts by mass.

In some preferred embodiments, the degradation agent is 75-90 parts by mass.

In some preferred embodiments, the degradation agent is 75-85 parts by mass.

In some embodiments, the foamable composition comprises 80 parts by mass of methacrylonitrile as a first comonomer, 100 parts by mass of methacrylic acid as a second comonomer, 2 parts by mass of methacrylamide as a third comonomer, 2.5 parts by mass of azobisisobutyronitrile as an initiator, 12.5 parts by mass of formamide as a foaming agent, 2 parts by mass of allyl methacrylate as a crosslinking agent, and 30-90 parts by mass of polylactic acid as a degradation agent.

In some embodiments, the degradation agent is 30-90 parts by mass, for example, 30 parts, 35 parts, 40 parts, 45 parts, 50 parts, 55 parts, 60 parts, 65 parts, 70 parts, 75 parts, 80 parts, 85 parts, or 90 parts.

In some embodiments, the degradation agent is 40-90 parts by mass.

In some embodiments, the degradation agent is 50-90 parts by mass.

In some preferred embodiments, the degradation agent is 60-90 parts by mass.

In some preferred embodiments, the degradation agent is 70-90 parts by mass.

In some preferred embodiments, the degradation agent is 75-90 parts by mass.

In some preferred embodiments, the degradation agent is 75-85 parts by mass.

In some preferred embodiments, the foamable composition comprises 80 parts by mass of methacrylonitrile as a first comonomer, 100 parts by mass of methacrylic acid as a second comonomer, 2 parts by mass of methacrylamide as a third comonomer, 2.5 parts by mass of azobisisobutyronitrile as an initiator, 12.5 parts by mass of formamide as a foaming agent, 2 parts by mass of allyl methacrylate as a crosslinking agent, and 90 parts by mass of polylactic acid as a degradation agent.

In some embodiments, the foamable composition comprises 100 parts by mass of acrylonitrile as a first comonomer, 80 parts by mass of methacrylic acid as a second comonomer, 2 parts by mass of methacrylamide as a third comonomer, 2 parts by mass of tert-butyl peroxy-2-ethylhexanoate as an initiator, 15 parts by mass of isopropanol as a foaming agent, 1 part by mass of magnesium methacrylate as a crosslinking agent, and 30-90 parts by mass of polylactic acid as a degradation agent.

In some embodiments, the degradation agent is 30-90 parts by mass, for example, 30 parts, 35 parts, 40 parts, 45 parts, 50 parts, 55 parts, 60 parts, 65 parts, 70 parts, 75 parts, 80 parts, 85 parts, or 90 parts.

In some embodiments, the degradation agent is 40-90 parts by mass.

In some embodiments, the degradation agent is 50-90 parts by mass.

In some preferred embodiments, the degradation agent is 60-90 parts by mass.

In some preferred embodiments, the degradation agent is 70-90 parts by mass.

In some preferred embodiments, the degradation agent is 75-90 parts by mass.

In some preferred embodiments, the degradation agent is 75-85 parts by mass.

In some preferred embodiments, the foamable composition comprises 100 parts by mass of acrylonitrile as a first comonomer, 80 parts by mass of methacrylic acid as a second comonomer, 2 parts by mass of methacrylamide as a third comonomer, 2 parts by mass of tert-butyl peroxy-2-ethylhexanoate as an initiator, 15 parts by mass of isopropanol as a foaming agent, 1 part by mass of magnesium methacrylate as a crosslinking agent, and 90 parts by mass of polylactic acid as a degradation agent.

In another aspect, the present disclosure provides a biodegradable foam obtained by foaming the foamable composition according to any one of the foregoing.

In another aspect, the present disclosure provides a preparation method for biodegradable foam, characterized in that the method comprising the following steps:
S1. prepolymerization: performing polymerization reaction by the foamable composition according to any one of the foregoing to obtain a prepolymer;
S2. heat treatment before foaming: heat treating the prepolymer to obtain a polymer;
S3. foaming: foaming the polymer to obtain foam.

In some embodiments, a degradation agent, a comonomer, an initiator, a foaming agent and a crosslinking agent are comprised in the polymerization reaction system to allow *in-situ* polymerization of the degradation agent and the comonomer.

In some embodiments, the temperature for the polymerization reaction is 20°C-60°C.

In some preferred embodiments, the temperature for the polymerization reaction is 30°C-55°C.

In some more preferred embodiments, the temperature for the polymerization reaction is 35°C-50°C.

In some embodiments, the temperature for the heat treatment is 60°C-120°C.

In some preferred embodiments, the temperature for the heat treatment is 80°C-110°C.

In some preferred embodiments, the temperature for the heat treatment is 100°C-120°C.

In some more preferred embodiments, the temperature for the heat treatment is 100°C.

In some embodiments, the temperature for the foaming is 160°C-250°C.

In some preferred embodiments, the temperature for the foaming is 180°C-250°C.

In some preferred embodiments, the temperature for the foaming is 180°C-220°C.

In some more preferred embodiments, the temperature for the foaming is 200°C-220°C.

In some further more preferred embodiments, the temperature for the foaming is 200°C.

In some embodiments, the preparation method further comprises the following steps:
S4. heat treatment after foaming: heat treating the foam at 135°C-220°C to obtain high temperature resistant foam.

In some preferred embodiments, the foam is heat treated at 150°C-220°C.

In some preferred embodiments, the foam is heat treated at 160°C-200°C.

In some more preferred embodiments, the foam is heat treated at 180°C-220°C.

In some further more preferred embodiments, the foam is heat treated at 180°C.

In another aspect, the present disclosure also provides a preparation method for biodegradable PMI foam, with preparation steps as the following:
S0. ingredient preparation: adding 1-100 parts of methacrylonitrile or acrylonitrile, 1-100 parts of methacrylic acid, 0-10 parts of a third comonomer, 0.1-10 parts of an initiator, 0.1-20 parts of a foaming agent, 0.1-10 parts of cross-linking agent and 50-90 parts of degradation agent into a reaction kettle according to the parts by weight, stirring uniformly, fully mixing at room temperature and pouring into a mold;
S1. polymerization: placing the mold in a water bath at a constant temperature of 20°C-60°C for reaction for 5 days - 15 days, so that the degradation agent and the MAA/MAN/AN comonomer are subjected to *in-situ* polymerization to obtain a PMI prepolymer containing degradation agent blocks;
S2. pretreatment: putting the PMI prepolymerization plate into a circulating air oven for treatment at 60°C-120°C for 6 hours - 20 hours to obtain a PMI polymerization plate;
S3. foaming: foaming the PMI polymerization plate at 160°C-250°C to obtain PMI foam;
S4. heat treatment: baking the PMI foam at 135°C-220°C to obtain high temperature resistant PMI foam.

In some embodiments, in step S3, the PMI polymerization plate is foamed at 180°C-250°C.

In some preferred embodiments, in step S3, the PMI polymerization plate is foamed at 180°C-220°C.

In some preferred embodiments, in step S3, the PMI polymerization plate is foamed at 200°C-220°C.

In some more preferred embodiments, in step S3, the PMI polymerization plate is foamed at 200°C.

In some embodiments, the PMI polymerization plate is foamed at the temperature for 4 hours - 8 hours.

In some preferred embodiments, the PMI polymerization plate is foamed at the temperature for 4 hours.

In some embodiments, in step S4, the PMI polymerization plate is baked at 150°C-220°C.

In some preferred embodiments, in step S4, the PMI polymerization plate is baked at 160°C-200°C.

In some preferred embodiments, in step S4, the PMI polymerization plate is baked at 180°C-220°C.

In some more preferred embodiments, in step S4, the PMI polymerization plate is baked at 180°C.

In some embodiments, the PMI polymerization plate is baked at the temperature for 20 hours - 48 hours.

In some preferred embodiments, the PMI polymerization plate is baked at the temperature for 20 hours - 36 hours.

In some more preferred embodiments, the PMI polymerization plate is baked at the temperature for 24 hours.

In some embodiments, the preparation method comprises the steps of (a) or (b) below:
(a)
   S0. ingredient preparation: adding 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 90 parts of polylactic acid into a reaction kettle according to the parts by weight, stirring uniformly, fully mixing at room temperature and pouring into a mold;
   S1. polymerization: placing the mold in a water bath at a constant temperature of 35°C-50°C for reaction for 5 days, so that the degradation agent and the MAA/MAN/AN comonomer are subjected to *in-situ* polymerization to obtain a PMI prepolymer containing degradation agent blocks;
   S2. pretreatment: putting the PMI prepolymerization plate into a circulating air oven for treatment at 100°C for 6 hours to obtain a PMI polymerization plate;
   S3. foaming: foaming the PMI polymerization plate at 200°C for 4 hours to obtain PMI foam;
   S4. heat treatment: baking the PMI foam at 180°C for 24 hours to obtain high temperature resistant PMI foam;
      or
(b)
   S0. ingredient preparation: adding 100 parts of acrylonitrile, 80 parts of methacrylic acid, 1 part of acrylamide, 2 parts of tert-butyl peroxy-2-ethylhexanoate, 15 parts of isopropanol, 1 part of magnesium methacrylate, and 90 parts of polylactic acid into a reaction kettle according to the parts by weight, stirring uniformly, fully mixing at room temperature and pouring into a mold;
   S1. polymerization: placing the mold in a water bath at a constant temperature of 35°C-50°C for reaction for 5 days, so that the degradation agent and the MAA/MAN/AN comonomer are subjected to *in-situ* polymerization to obtain a PMI prepolymer containing degradation agent blocks;
   S2. pretreatment: putting the PMI prepolymerization plate into a circulating air oven for treatment at 100°C for 6 hours to obtain a PMI polymerization plate;
   S3. foaming: foaming the PMI polymerization plate at 200°C for 4 hours to obtain PMI foam;
   S4. heat treatment: treating the PMI foam at 180°C for 24 hours to obtain high temperature resistant PMI foam.

The biodegradable foams according to some embodiments of the present disclosure are illustrated by specific examples, all raw materials used in the following examples are conventional commercially available products.

Among them,
methacrylonitrile: purity≥99.5%
methacrylic acid: purity≥99%
methacrylamide: purity≥98%
acrylamide: purity≥98%
azobisisobutyronitrile: purity≥99%
tert-butyl peroxy-2-ethylhexanoate : purity: ≥97%
formamide: purity≥99.5%
isopropanol: purity≥99%
propyl methacrylate: purity≥95%
magnesium methacrylate: purity≥98%
polylactic acid molecular weight: 70,000-120,000
polycaprolactone: molecular weight: 50,000 - 100,000
starch-based polyether polyol: hydroxyl value of polyols is 400-500 mg KOH/g.

### Example 1

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent and 2 parts of allyl methacrylate as a crosslinking agent.
S0. ingredient preparation: 80 parts of methacrylonitrile, 100 parts of methacrylic acid, 2 parts of methacrylamide, 2.5 parts of azobisisobutyronitrile, 12.5 parts of formamide and 2 parts of allyl methacrylate are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days to obtain a transparent PMI prepolymerization plate;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 2

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 90 parts of polylactic acid as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide and 2 parts of allyl methacrylate are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days to obtain a transparent PMI prepolymerization plate;
S2. heat treatment before foaming: putting the PMI prepolymerization plate into a circulating air oven for treatment at 100°C for 6 hours to obtain a PMI polymerization plate;
S3. mixing: crushing the PMI polymerization plate into particles, adding 90 parts of polylactic acid and 8 parts of epoxy resin, mixing and stirring evenly;
S4. foaming: placing the PMI mixed material in a mold for foaming at 200°C for 4 hours to obtain PMI foam;
S5. heat treatment after foaming: treating the PMI foam at 180°C for 24 hours to obtain high temperature resistant PMI foam.

### Example 3

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 90 parts of polycaprolactone as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide and 2 parts of allyl methacrylate are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days to obtain a transparent PMI prepolymerization plate;
S2. heat treatment before foaming: putting the PMI prepolymerization plate into a circulating air oven for treatment at 100°C for 6 hours to obtain a PMI polymerization plate;
S3. mixing: crushing the PMI polymerization plate into particles, adding 90 parts of polycaprolactone and 8 parts of epoxy resin, mixing and stirring evenly;
S4. foaming: placing the PMI mixed material in a mold for foaming at 200°C for 4 hours to obtain PMI foam;
S5. heat treatment after foaming: treating the PMI foam at 180°C for 24 hours to obtain high temperature resistant PMI foam.

### Example 4

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 90 parts of starch-based polyether polyol as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide and 2 parts of allyl methacrylate are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days to obtain a transparent PMI prepolymerization plate;
S2. heat treatment before foaming: putting the PMI prepolymerization plate into a circulating air oven for treatment at 100°C for 6 hours to obtain a PMI polymerization plate;
S3. mixing: crushing the PMI polymerization plate into particles, adding 90 parts of starch-based polyether polyol and 8 parts of epoxy resin, mixing and stirring evenly;
S4. foaming: placing the PMI mixed material in a mold for foaming at 200°C for 4 hours to obtain PMI foam;
S5. heat treatment after foaming: treating the PMI foam at 180°C for 24 hours to obtain high temperature resistant PMI foam.

### Performance Test 1

The PMI foams finally obtained in Example 1 - Example 4 were tested for mechanical properties such as PMI foam density, compressive properties, tensile properties, etc., and the final biodegradation rate at 180 days was measured. Density shall be tested in accordance with GB/T 6343; compression properties shall be tested in accordance with GB/T 8813; tensile properties shall be tested in accordance with GB/T 1040.2; biodegradability shall be tested in accordance with GB/T 19277.1-2011. The test results are as follows:

**Table of Test Result**

| **Example** | | **Density** | **Compression Strength** | **Modulus Of Compression** | **Tensile Strength** | **Tensile Modulus** | **Biodegradation Rate** |
|---|---|---|---|---|---|---|---|
| | | **kg/m³** | **MPa** | **MPa** | **MPa** | **MPa** | **%** |
| Example 1 | Base Formula 1 | 115 | 3.82 | 170 | 4. 20 | 180 | 53.02 |
| Example 2 | +90 polylactic acid | 208 | 3.00 | 100 | 2.50 | 110 | 79.21 |
| Example 3 | +90 Polycaprolact one | 205 | 2.95 | 92 | 2.46 | 107 | 75.99 |
| Example 4 | +90 starch-based polyether polyol | 203 | 2.96 | 97 | 2.42 | 106 | 78.64 |

According to GB/T 20197-2006, when the biodegradation rate reaches more than 60%, it meets the technical requirements for the degradation performance of biodegradable plastics or compostable plastics. The table of test result shows that after the degradation agents polylactic acid, polycaprolactone, and starch-based polyether polyol were added in Example 2 - Example 4, the biodegradation rate of PMI foam all exceeded 60%, reaching technical requirements for the degradation performance of biodegradable plastics or compostable plastics.

Generally, mechanical properties of PMI foam increase with increasing density. The foam density of Example 2 - Example 4 is higher than that in Example 1, but the mechanical properties of the foam are all lower than that of the foam in Example 1.

### Example 5

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 90 parts of polylactic acid as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 90 parts of polylactic acid are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/MAN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 6

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 90 parts of polycaprolactone as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 90 parts of polycaprolactone are added into a reaction kettle according to the parts by weight, stirred uniformly, and poured into a mold after being fully mixed at room temperature;
S1. polymerization: placing the mold in a water bath at a constant temperature of 35°C-50°C for reaction for 5 days, so that the degradation agent and the MAA/MAN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 7

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 90 parts of starch-based polyether polyol as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 90 parts of starch-based polyether polyol are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/MAN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Performance Test 2

The PMI foams finally obtained in Example 5 - Example 7 were tested for mechanical properties such as density, compressive property, tensile property and final biodegradation rate at 180 days according to the methods in Performance Test 1. The test results are as follows:

**Table of Test Result**

| **Example** | | **Density** | **Compression Strength** | **Modulus Of Compression** | **Tensile Strength** | **Tensile Modulus** | **Biodegradation Rate** |
|---|---|---|---|---|---|---|---|
| | | **kg/m³** | **MPa** | **MPa** | **MPa** | **MPa** | **%** |
| Example 5 | +90 polylactic acid | 114 | 3.03 | 136 | 3.30 | 140 | 84.16 |
| Example 6 | +90 Polycaprolactone | 117 | 2.45 | 103 | 2.64 | 109 | 81.33 |
| Example 7 | +90 starch-based polyether polyol | 115 | 2.68 | 118 | 3.00 | 124 | 80.85 |

The table of test result shows that after the degradation agents polylactic acid, polycaprolactone, and starch-based polyether polyol were added in Example 5 - Example 7, the biodegradation rate of PMI foam all exceeded 60%, reaching technical requirements for the degradation performance of biodegradable plastics or compostable plastics.

Compared to Example 2 - Example 4, in which degradation agent was added after prepolymerization by stepwise mixing, Example 5 - Example 7, in which degradation agent was added in prepolymerization step by *in situ* polymerization, PMI foam prepared had basically the same density as Example 1, with mechanical properties greatly improved compared with Example 2 - Example 4. At the same time, the biodegradation rate of PMI foam prepared in Example 5 - Example 7 was also improved. In particular, in Example 5, PMI foam prepared by using polylactic acid as a degradation agent had a lower density than that of Examples 6 and Example 7, but was superior in biodegradation rate and mechanical properties than those of Examples 6 and Example 7.

### Example 8

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 30 parts of polylactic acid as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 30 parts of polylactic acid are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/MAN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 9

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 40 parts of polylactic acid as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 40 parts of polylactic acid are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/MAN comonomer are subjected to *in-situ* polymerization to obtain a transparent PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 10

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 50 parts of polylactic acid as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 50 parts of polylactic acid are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/MAN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 11

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 60 parts of polylactic acid as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 60 parts of polylactic acid are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/MAN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 12

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 70 parts of polylactic acid as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 70 parts of polylactic acid are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/MAN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 13

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 80 parts of polylactic acid as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 80 parts of polylactic acid are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/MAN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 14

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 100 parts of polylactic acid as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 100 parts of polylactic acid are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/MAN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 15

The foamable composition comprises 80 parts of methacrylonitrile as a first comonomer, 100 parts of methacrylic acid as a second comonomer, 2 parts of methacrylamide as a third comonomer, 2.5 parts of azobisisobutyronitrile as an initiator, 12.5 parts of formamide as a foaming agent, 2 parts of allyl methacrylate as a crosslinking agent, and 110 parts of polylactic acid as a degradation agent.
S0. ingredient preparation: 80 parts of methacrylonitrile, 100 parts of methacrylic acid, 2 parts of methacrylamide, 2.5 parts of azobisisobutyronitrile, 12.5 parts of formamide, 2 parts of allyl methacrylate, and 110 parts of polylactic acid are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/MAN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Performance Test 3

The PMI foams finally obtained in Example 8 - Example 11 were tested for mechanical properties such as density, compressive property, tensile property and final biodegradation rate at 180 days according to the methods in Performance Test 1. The test results are as follows:

**Table of Test Result**

| **Example** | | **Density** | **Compression Strength** | **Modulus Of Compression** | **Tensile Strength** | **Tensile Modulus** | **Biodegradation Rate** |
|---|---|---|---|---|---|---|---|
| | | **kg/m³** | **MPa** | **MPa** | **MPa** | **MPa** | **%** |
| Example 8 | +30 polylactic acid | 113 | 3. 72 | 165 | 4. 05 | 174 | 60. 09 |
| Example 9 | +40 polylactic acid | 115 | 3.58 | 157 | 3.82 | 165 | 65.23 |
| Example 10 | +50 polylactic acid | 113 | 3.41 | 150 | 3.76 | 163 | 73.10 |
| Example 11 | +60 polylactic acid | 114 | 3.32 | 148 | 3.62 | 158 | 76.19 |
| Example 12 | +70 polylactic acid | 112 | 3.22 | 145 | 3.55 | 152 | 79.04 |
| Example 13 | +80 polylactic acid | 118 | 3.15 | 141 | 3.42 | 147 | 81.69 |
| Example 14 | +100 polylactic acid | 115 | 2.52 | 110 | 2.80 | 121 | 85.21 |
| Example 15 | +110 polylactic acid | 113 | 2.30 | 102 | 2.51 | 107 | 86.12 |

The table of test result shows that after adding 30-110 parts of the degradation agent polylactic acid in Example 8 - Example 15, the biodegradation rate of PMI foam all exceeded 60%, reaching technical requirements for the degradation performance of biodegradable plastics or compostable plastics.

Compared to Example 5 in which 90 parts of polylactic acid were added, Example 14 and Example 15 in which more than 100 parts of polylactic acid were added show significant decrease in mechanical properties.

### Example 16

The foamable composition comprises 100 parts of acrylonitrile as a first comonomer, 80 parts of methacrylic acid as a second comonomer, 1 part of acrylamide as a third comonomer, 2 parts of tert-butyl peroxy-2-ethylhexanoate as an initiator, 15 parts of isopropanol as a foaming agent, and 1 part of magnesium methacrylate as a crosslinking agent.
S0. ingredient preparation: 100 parts of acrylonitrile, 80 parts of methacrylic acid, 1 part of acrylamide, 2 parts of tert-butyl peroxy-2-ethylhexanoate, 15 parts of isopropanol, and 1 part of magnesium methacrylate are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days to obtain a transparent PMI prepolymerization plate;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Example 17

The foamable composition comprises 100 parts of acrylonitrile as a first comonomer, 80 parts of methacrylic acid as a second comonomer, 1 part of acrylamide as a third comonomer, 2 parts of tert-butyl peroxy-2-ethylhexanoate as an initiator, 15 parts of isopropanol as a foaming agent, 1 part of magnesium methacrylate as a crosslinking agent, and 90 parts of polylactic acid as a degradation agent.
S0. ingredient preparation: 100 parts of acrylonitrile, 80 parts of methacrylic acid, 1 part of acrylamide, 2 parts of tert-butyl peroxy-2-ethylhexanoate, 15 parts of isopropanol, 1 part of magnesium methacrylate, and 90 parts of polylactic acid are added into a reaction kettle according to the parts by weight, stirred uniformly, and poured into a mold after being fully mixed at room temperature;
S1. prepolymerization: placing the mold in a water bath at a constant temperature of 35°C-50°C for reaction for 5 days, so that the degradation agent and the MAA/AN comonomer are subjected to *in-situ* polymerization to obtain a PMI prepolymer containing degradation agent blocks;
S2. heat treatment before foaming: putting the PMI prepolymerization plate into a circulating air oven for treatment at 100°C for 6 hours to obtain a PMI polymerization plate;
S3. foaming: foaming the PMI polymerization plate at 200°C for 4 hours to obtain PMI foam;
S4. heat treatment after foaming: treating the PMI foam at 180°C for 24 hours to obtain high temperature resistant PMI foam.

### Performance Test 4

The PMI foams finally obtained in Example 16 - Example 17 were tested for mechanical properties such as density, compressive property, tensile property and final biodegradation rate at 180 days according to the methods in Performance Test 1. The test results are as follows:

**Table of Test Result**

| **Example** | | **Density** | **Compression Strength** | **Modulus Of Compression** | **Tensile Strength** | **Tensile Modulus** | **Biodegradation Rate** |
|---|---|---|---|---|---|---|---|
| | | **kg/m³** | **MPa** | **MPa** | **MPa** | **MPa** | **%** |
| Example 16 | Base Formula 2 | 115 | 3.76 | 166 | 4.00 | 190 | 53.05 |
| Example 17 | +90 polylactic acid | 115 | 3.02 | 138 | 3.15 | 154 | 83.25 |

The table of test result shows that after the degradation agent polylactic acid is added to the basic formula 2 of the present disclosure, the biodegradation rate of PMI foam all exceeded 60%, reaching technical requirements for the degradation performance of biodegradable plastics or compostable plastics.

Compared to Example 5, Example 17 shows a significant increase in tensile modulus of the final PMI foam with different base formulation and the same degradation agent added.

In summary, the accelerated biodegradable PMI foam and the preparation method thereof provided by the embodiments of the present disclosure improves the biodegradation rate of PMI foam through scientific addition of degradation agents and formula adjustment, and the technical solutions provided by some embodiments of the present disclosure also retain the high mechanical properties of PMI foam.

While embodiments of the present disclosure have been shown and described, it will be appreciated by those skilled in the art that numerous changes, modifications, substitutions, and variations may be made to these embodiments without departing from the principles and spirit of the present disclosure, the scope of which is defined by the equivalents of the appended claims.

## Claims

1. A foamable composition comprising a comonomer, an initiator, a foaming agent and a crosslinking agent, wherein the comonomer comprises a first comonomer and a second comonomer, **characterized in that**:
the first comonomer is selected from one or two of methacrylonitrile or acrylonitrile, and the second comonomer is selected from methacrylic acid;
the composition further comprises a degradation agent selected from one or a combination of two or more of polylactic acid, starch-based polyether polyol and polycaprolactone;
the mass ratio of the degradation agent to the comonomer is 30-132 : 180.

2. The foamable composition according to claim 1, wherein the comonomer further comprises a third comonomer, the third comonomer is selected from acrylamide monomers.

3. The foamable composition according to claim 2, wherein the acrylamide monomer is selected from any one or a combination of two or more of acrylamide, methacrylamide, N-hydroxymethyl acrylamide and N,N-dimethyl acrylamide.

4. The foamable composition according to any one of claims 1-3, wherein the initiator is selected from any one or a combination of two or more of azobisisobutyronitrile, azobisisoheptanitrile, tert-butyl peroxy-2-ethylhexanoate and dilauryl peroxide; the foaming agent is selected from any one or a combination of two or more of formamide, N,N-dimethyl formamide, isopropanol, isobutanol, octane and isooctane; and the crosslinking agent is any one or two of allyl methacrylate and magnesium methacrylate.

5. The foamable composition according to any one of claims 1-4, wherein the molecular weight of the polylactic acid is 30,000-150,000, preferably 50,000-140,000, more preferably 80,000-110,000;
the molecular weight of the polycaprolactone is 10,000-120,000, preferably 40,000-100,000, more preferably 60,000-90,000;
the hydroxyl value of the starch-based polyether polyol is 300-600 mg KOH/g.

6. The foamable composition according to any one of claims 1-5, wherein the degradation agent is selected from polylactic acid.

7. The foamable composition according to any one of claims 1-6, wherein the mass ratio of the degradation agent to the comonomer is 50-110 : 180.

8. The foamable composition according to any one of claims 1-7, wherein the mass ratio of the first comonomer to the second comonomer is 0.6-1.5 : 1.

9. The foamable composition according to any one of claims 1-8, wherein the foamable composition comprises 64-120 parts by mass of a first comonomer, 64-120 parts by mass of a second comonomer, 1.2-3 parts by mass of an initiator, 10-18 parts by mass of a foaming agent, 0.8-2.4 parts by mass of a crosslinking agent, 30-132 parts by mass of a degradation agent, and 0-2.4 parts by mass of a third comonomer.

10. The foamable composition according to claim 9, wherein the foamable composition comprises 72-110 parts by mass of a first comonomer, 72-110 parts by mass of a second comonomer, 1.8-2.75 parts by mass of an initiator, 11.25-16.5 parts by mass of a foaming agent, 0.9-2.2 parts by mass of a crosslinking agent, 40-121 parts by mass of a degradation agent, and 0.9-2.2 parts by mass of a third comonomer;
preferably, wherein the foamable composition comprises 80-100 parts by mass of a first comonomer, 80-100 parts by mass of a second comonomer, 2-2.5 parts by mass of an initiator, 12.5-15 parts by mass of a foaming agent, 1-2 parts by mass of a crosslinking agent, 30-110 parts by mass of a degradation agent, and 0.9-2.2 parts by mass of a third comonomer;
preferably, wherein the foamable composition comprises 80-100 parts by mass of a first comonomer, 80-100 parts by mass of a second comonomer, 2-2.5 parts by mass of an initiator, 12.5-15 parts by mass of a foaming agent, 1-2 parts by mass of a crosslinking agent, 70-100 parts by mass of a degradation agent, and 1-2 parts by mass of a third comonomer.

11. The foamable composition according to claim 1, wherein the foamable composition comprises 72-88 parts by mass of methacrylonitrile as a first comonomer, 90-110 parts by mass of methacrylic acid as a second comonomer, 1.8-2.2 parts by mass of methacrylamide as a third comonomer, 2-2.75 parts by mass of azobisisobutyronitrile as an initiator, 11.25-13.75 parts by mass of formamide as a foaming agent, 1.8-2.2 parts by mass of allyl methacrylate as a crosslinking agent, and 30-99 parts by mass of polylactic acid as a degradation agent;
preferably, the foamable composition comprises 80 parts by mass of methacrylonitrile as a first comonomer, 100 parts by mass of methacrylic acid as a second comonomer, 2 parts by mass of methacrylamide as a third comonomer, 2.5 parts by mass of azobisisobutyronitrile as an initiator, 12.5 parts by mass of formamide as a foaming agent, 2 parts by mass of allyl methacrylate as a crosslinking agent, and 30-90 parts by mass of polylactic acid as a degradation agent.

12. The foamable composition according to claim 1, wherein the foamable composition comprises 90-110 parts by mass of acrylonitrile as a first comonomer, 72-88 parts by mass of methacrylic acid as a second comonomer, 0.9-1.1 parts by mass of acrylamide as a third comonomer, 1.8-2.2 parts by mass of tert-butyl peroxy-2-ethylhexanoate as an initiator, 13.5-16.5 parts by mass of isopropanol as a foaming agent, 0.9-1.1 parts by mass of magnesium methacrylate as a crosslinking agent, and 30-99 parts by mass of polylactic acid as a degradation agent;
preferably, the foamable composition comprises 100 parts by mass of acrylonitrile as a first comonomer, 80 parts by mass of methacrylic acid as a second comonomer, 2 parts by mass of methacrylamide as a third comonomer, 2 parts by mass of tert-butyl peroxy-2-ethylhexanoate as an initiator, 15 parts by mass of isopropanol as a foaming agent, 1 part by mass of magnesium methacrylate as a crosslinking agent, and 30-90 parts by mass of polylactic acid as a degradation agent.

13. The foamable composition according to any one of claims 9-12, wherein the foamable composition comprises 70-90 parts by mass of a degradation agent;
preferably, wherein the foamable composition comprises 90 parts by mass of a degradation agent;
preferably, wherein the foamable composition comprises 80 parts by mass of methacrylonitrile as a first comonomer, 100 parts by mass of methacrylic acid as a second comonomer, 2 parts by mass of methacrylamide as a third comonomer, 2.5 parts by mass of azobisisobutyronitrile as an initiator, 12.5 parts by mass of formamide as a foaming agent, 2 parts by mass of allyl methacrylate as a crosslinking agent, and 90 parts by mass of polylactic acid as a degradation agent;
preferably, wherein the foamable composition comprises 100 parts by mass of acrylonitrile as a first comonomer, 80 parts by mass of methacrylic acid as a second comonomer, 1 part by mass of acrylamide as a third comonomer, 2 parts by mass of tert-butyl peroxy-2-ethylhexanoate as an initiator, 15 parts by mass of isopropanol as a foaming agent, 1 part by mass of magnesium methacrylate as a crosslinking agent, and 90 parts by mass of polylactic acid as a degradation agent.

14. A biodegradable foam **characterized in that** it is obtained by foaming the foamable composition according to any one of claims 1-13.

15. A preparation method for biodegradable foam, **characterized in that** the method comprises the following steps:
S1. prepolymerization: performing polymerization reaction on the foamable composition according to any one of claims 1-13 to obtain a prepolymer;
S2. heat treatment before foaming: heat treating the prepolymer to obtain a polymer;
S3. foaming: foaming the polymer to obtain foam.

16. The preparation method according to claim 15, wherein in step S1, a degradation agent, a comonomer, an initiator, a foaming agent and a crosslinking agent are comprised in a polymerization reaction system.

17. The preparation method according to claim 15 or 16, wherein in step S1, the temperature for the polymerization reaction is 20°C-60°C, preferably 30°C-55°C, more preferably 35°C-50°C.

18. The preparation method according to any one of claims 15-17, wherein the temperature for the heat treatment in step S2 is 60°C-120°C, preferably 100°C-120°C, more preferably 100°C.

19. The preparation method according to any one of claims 15-18, wherein the temperature for the foaming in step S3 is 160°C-250°C, preferably 180°C-250°C, more preferably 200°C-220°C, further more preferably 200°C;
preferably, the time for the foaming in step S3 is 4 hours - 8 hours, more preferably 4 hours.

20. The preparation method according to any one of claims 15-19, further comprising the following steps:
S4. heat treatment after foaming: heat treating the foam at 135°C-220°C to obtain high temperature resistant foam;
preferably, the foam is heat treated at 150°C-220°C, more preferably 180°C-220°C, further more preferably 180°C;
preferably, the time for the heat treating of the foam is 20 hours - 48 hours, more preferably 24-36 hours, further more preferably 24 hours.
